# EUROPÄISCHE PATENTANMELDUNG

(11) **EP 1 418 401 A1**
(43) Veröffentlichungstag der Anmeldung: **12.05.2004**
(21) Anmeldenummer: 03006918.1
(22) Anmeldetag: 26.03.2003
(51) Int. Cl.: G01C 11/02, G01S 17/02, G01S 17/89

(54) **Verfahren und Vorrichtung zur luft- oder raumgestützten Photogrammetrie**

(71) Anmelder: Leica Geosystems AG, 9435 Heerbrugg (CH)
(72) Erfinder: Braunecker, Bernhard, 9445 Rebstein (CH)
(74) Vertreter: Kaminski, Susanne, Dr.

(57) **Zusammenfassung**

Durch ein Verfahren und eine dazugehörige Vorrichtung werden während eines Kamerafluges mit einem Luftfahrzeug (1) oder Raumfahrzeug zur Aufnahme photogrammetrisch verwendbarer Bilder einer Oberfläche (2) zusätzlich Distanzmessungen zu Stützstellen (5) mit Laserstrahlen (4) eines Laserentfernungsmessers durchgeführt.

Die Distanzmessungen werden jeweils für einen Satz von Bildpunkten (3a) aufgenommen und später als Zwangsbedingungen für die Erstellung einer Topographie der Oberfläche (2) verwendet. Aufgenommene Distanzmessungen können darüber hinaus zu einer Optimierung der Aufnahme- und Flugparameter verwendet werden.

## Beschreibung

Die Erfindung betrifft ein Verfahren zur luft- oder raumgestützten Photogrammetrie nach dem Oberbegriff des Anspruchs 1, ein Verfahren zur photogrammetrischen Berechnung nach Anspruch 6, eine Vorrichtung nach Anspruch 7 sowie einen optischen Detektor nach Anspruch 11.

Bei Verfahren der Luftbildphotogrammetrie werden während eines Kamerafluges bzw. einer Aufnahmebewegung Bilder von der Erdoberfläche bzw. einem Himmelskörpers unter mindestens zwei verschiedenen Winkeln aufgenommen, aus denen aufgrund der Kollinearitätsbeziehung ein Höheninformation, beispielsweise zu Erstellung von Kartenmaterial, errechnet werden kann. In modernen Umsetzungen dieser Methode werden photographische Aufnahmen durch Einscannen zur elektronischen Weiterverarbeitung digitalisiert oder aber bereits während des Fluges digital aufgenommen. Im folgenden soll unter Luftbildphotogrammetrie stets auch die Aufnahme von Bildern aus verschiedensten Systemen verstanden werden, die gegenüber einer topographisch zu erfassenden Oberfläche bewegt werden. Insbesondere betrifft dies auch die weltraumgestützte Vermessung von Planeten durch Satelliten oder Raumfahrzeuge.

Digitale Luftbilder werden während eines Kamerafluges bzw. einer Aufnahmebewegung durch Abbildung einer Oberfläche auf eine geeignete Aufnahmevorrichtung, üblicherweise eine CCDoder Video-Kamera, in Form einzelner Bildpunkte in einen Speicher eingelesen. Diese Bildpunkte können entweder nur binär oder mehrfarbig bzw. in Graustufen, oder im nichtsichtbaren Spektralbereich aufgenommen werden. Ein luftgestützter Digital-Sensor steht beispielsweise in Form des ADS40 der Firma Leica Geosystems zur Verfügung, der Daten sowohl panchromatisch als auch in drei visuellen Farbbändern und einem nah-infraroten Band liefern kann.

Aus den unter verschiedenen Winkeln aufgenommenen Stereobildern wird durch einen Rechenvorgang die Oberflächentopographie abgeleitet. Dieser Vorgang erfolgt aufgrund der zu verarbeitenden Datenmenge üblicherweise nach dem Flug in Form eines Post-Processings. Für einen zweistündigen Flug liegt die eingelesene Datenmenge typischerweise in der Grössenordnung von einem Terabyte und die damit verbundene Rechenzeit bei ca. 24 Stunden.

Ursache der langen Rechenzeiten ist das Verfahren, das aus den Bildern aufgrund der mathematischen Kollinearitätsbedingung unter Einbeziehung von drei translatorischen, drei rotatorischen Freiheitsgraden des Sensors und möglichen Abbildungsfehlern eine geodätische Höheninformation für die einzelne Bildpunkte ableitet.

Dazu kommt die Problematik, dass die Aufnahmen in ihren Parametern während eines Kameraflugs nicht oder nur geringfügig angepasst werden können. So unterscheiden sich beispielsweise die erforderlichen Informationsdichten über Gewässern oder über Gebirgsformationen oder Steilabbrüchen, bei denen die abzuleitenden Daten über Höhendifferenzen eine feinere Granularität besitzen müssen.

Aus der Patentschrift US 4,199,759 ist ein System zur Korrelation von elektronischer Entfernungsmessung und Luftbildphotographie zur Erweiterung der geodätischen Kontrolle beschrieben. Ein tieffliegendes Luftfahrzeug wird als elektronische Station und Referenzsystem zur Ortsbestimmung verwendet und durch eine Kamera in einem Kameraträger, der ein anderes Luftfahrzeug oder ein Satellit sein kann, photographiert. Dabei ist der durch Funkpeilung zu Referenzstationen bestimmte Kurs des tieffliegenden Flugzeuges genau bekannt und die gewonnenen Positions-Daten werden für die spätere Bildverarbeitung genutzt.

Die Verwendung eines genau positionierten Referenzsystems erlaubt zwar die Gewinnung zusätzlicher Informationen für die Bildverarbeitung, besitzt aber den Nachteil, dass keine Informationen für einzelne Bildpunkte, insbesondere selektiv, abgeleitet werden können. Darüber hinaus bleibt durch den Abstand zwischen Boden und Referenzsystem stets eine weitere Fehlerquelle gegeben.

Die Patentschrift US 5,765,044 offenbart eine luftgestützte Vorrichtung zur kontinuierlichen Aufnahme von Luftbildern mit einer dreizeiligen Sensor-Kamera, deren Zeilen jeweils einer senkrechten, vorwärts und rückwärts gerichteten Blickrichtung entsprechen. Die Kamerahaltung wird über ein Gyroskop ermittelt und gegebenenfalls so korrigiert, dass ein rechter Winkel der optischen Achse gegenüber der überflogenen Oberfläche gewährleistet ist. Die Position wird mittels Global Positioning System (GPS) bestimmt. Die Bilddaten werden zusammen mit den Informationen über Kamerahaltung und -position zur weiteren Verarbeitung gespeichert.

Durch Verwendung von GPS-Systemen kann zwar die Position und Flughöhe des aufnehmenden Flugzeuges grob bestimmt werden, eine für einzelne Bildpunkte oder topographische Bereiche selektive Höheninformation kann auf diese Weise jedoch nicht erhalten werden, so dass eine hierdurch bedingte Verkürzung der Rechenzeit nicht möglich ist.

Eine Alternative zur herkömmlichen Photogrammetrie ist durch die direkte Entfernungsmessung vom Luftfahrzeug zu einzelnen Punkten mittels laserbasierter Distanzmessung (LIDAR) entstanden. Allerdings ist dieses Verfahren nicht in der Lage, im vergleichbaren Umfang weitere Informationen, beispielsweise in verschiedenen Spektralbereichen, zu liefern.

Ausserdem weisen LIDAR-Systeme mit einem scannenden geführten Strahl Nachteile auf, die aus dem mechanischen Aufbau resultieren. Entweder muss das gesamte Gerät über den aufzunehmenden Sichtbereich bewegt werde oder es muss die Strahlführung bei ansonsten unveränderlicher Vorrichtung variabel gestaltet werden. Neben dem Aufwand für solche mechanisch und/oder optisch anspruchsvollen bzw. komplexen Lösungen weisen diese meist eine nur geringe Abtastgeschwindigkeit auf und besitzen darüber hinaus einen vergleichsweise hohen Energieverbrauch.

Die Erfindung besitzt die Aufgabe, ein Verfahren und eine Vorrichtung bereit zu stellen, die durch zusätzlich aufgenommene Zwangsbedingungen die Rechenzeit zur Erstellung von Topographien aus digital aufgenommenen Luftbildern zu verkürzen.

Eine weitere Aufgabe besteht darin, eine Anpassung der Aufnahme von Bilddaten während des Kamerafluges oder einer andersgearteten Aufnahmebewegung zu ermöglichen.

Eine weitere Aufgabe besteht in der Bereitstellung eines Verfahrens und einer Vorrichtung zur Anpassung von Flugparametern des Luft- oder Raumfahrzeuges zur optimierten Aufnahme von Luftbildern.

Diese Aufgaben werden erfindungsgemäss durch die kennzeichnenden Merkmale der Ansprüche 1 bzw. 7 sowie durch die kennzeichnenden Merkmale der abhängigen Ansprüche gelöst bzw. die Lösungen fortgebildet.

Der Erfindung liegt die Idee zugrunde, durch zusätzliche Distanzmessungen zwischen Aufnahmesystem und Oberfläche weitere Informationen in Form von Stützstellen zu erhalten, die sowohl als Zwangsbedingungen im Bildverarbeitungsprozess als auch zur Anpassung der Flug- bzw. Aufnahmeparameter verwendet werden können.

Während der Erzeugung von Luftbildern, vorzugsweise mit einer mehrzeiligen Sensor-Kamera, werden zusätzlich zur Aufnahme von Bildpunkten Distanzmessungen zu Stützstellen mit durchgeführt, die jeweils einem Satz von mindestens einem Bildpunkt zugeordnet werden. Diese Distanzmessungen erfolgen vorzugsweise mit aktiven Distanzmessvorrichtungen, insbesondere mit Laserentfernungsmessern.

Eine hierfür geeignete Vorrichtung zur Distanzmessung ist beispielsweise aus den Patentschriften EP-0 701 702 und EP-0 738 899 bekannt.

Obwohl die Distanzmessung mit Laserstrahlen derzeit viele Vorteile bietet, ist das Verfahren grundsätzlich jedoch auch mit allen anderen Verfahren oder Vorrichtungen durchführbar, die eine Entfernungsmessung mit hinreichend punktgenauer Auflösung ermöglichen. Als weitere Distanzmessverfahren bietet sich die Verwendung von nicht-kohärenten Licht oder von kohärenter oder nicht-kohärenter elektromagnetischer Strahlung in anderen Wellenlängenbereichen an.

Die vorrichtungsseitige Umsetzung des Verfahrens kann sowohl unter Verwendung von getrennten Bauteilen für Entfernungsmessung und Bildaufnahme wie auch unter Integration beider Funktionen in einzelne Bauteile erfolgen. Die mit einem Entfernungsmesser vorgenommene Distanzmessung von einem vorgegebenen Bezugspunkt zu einer Stützstelle auf einer Oberfläche muss in Bezug zu der Bildaufnahme gesetzt werden können, so dass solange diese Bedingung erfüllt ist, verschiedene Orientierungen und Anordnungen der verschiedenen Komponenten möglich sind. Der die Distanzmessung definierende Bezugspunkt wird meistens durch den Aufbau und die Anordnung der entfernungsmessenden Komponente gegeben. Zur Realisierung kann beispielsweise in einer Kamerazeile aus einer grossen Zahl von Pixeln, die lediglich Intensitäten registrieren, einzelne Pixel zusätzlich auch zur Entfernungsmessung befähigt werden. Eine andere Ausführungsform kann durch eine Ein- bzw. Auskopplung von Strahlung für die Entfernungsmessung in den Strahlgang eines herkömmlichen Pixels realisiert werden, wobei diese Strahlung von einem Entfernungsmesser emittiert und diesem auch wieder zugeführt wird.

Die Zahl der Bildpunkte, denen jeweils eine Stützstelle und damit eine Distanzmessung von einem vorgegebenen Bezugspunkt zu dieser Stützstelle zugeordnet werden, kann von Zeile zu Zeile oder auch innerhalb einer Zeile variiert werden. Beispielsweise kann es erforderlich sein, über einem Steilabhang vermehrt Höheninformationen für die einzelnen Bildpunkte zu erhalten, so dass im Extremfall für jeden Bildpunkt eine Distanzmessung durchgeführt wird. Über Gewässerflächen kann es dagegen ausreichend ein, für grössere Mengen von Bildpunkten eine einzige, gemeinsame Messung durchzuführen.

Gegenüber den Bildpunkten muss die Stützstelle, d.h. der Aufpunkt der Distanzmessung am Boden, bekannt sein, um die Einbeziehung der Information in die Auswertung zu ermöglichen. Grundsätzlich ist es möglich, diesen Punkt beliebig zu setzen, solange er nur hinreichend nah an den Bildpunkten liegt, d.h. diesen benachbart ist. Vorzugsweise wird der Aufpunkt in der Mitte des durch den jeweiligen Satz an Bildpunkten abgedeckten Bereichs liegen oder auch mit einem der Bildpunkte, insbesondere mit dem jeweils in der Mitte des Satzes gelegenen, identisch sein.

Zahl und Lage der Stützstellen können, z.B. mittels mathematischer Optimierungsverfahren, sowohl vor dem Flug aufgrund einer Datenquelle festgelegt werden, beispielsweise anhand von vorhandenem Kartenmaterial, als auch während des Fluges ständig ermittelt oder angepasst werden.

Die absolute Zahl der Distanzmessungen wird vor allem durch den zu beanspruchenden Speicherplatz begrenzt werden, dabei kann die Speicherung der gewonnenen Entfernungsinformation in Zusammenhang mit den Bildpunkten oder auch separat hiervon erfolgen.

Durch die aufgenommenen Distanzinformationen kann bereits während des Fluges eine Vorstellung von der Topographie des überflogenen bzw. zu überfliegenden Geländes gewonnen werden. Hierfür ist es besonders vorteilhaft, Distanzmessungen für eine nach vorn gerichtete Sensorzeile auszuwerten, da so eine Anpassung der Flug- oder Aufnahmeparameter erfolgen kann. Diese sind beispielsweise Vergrösserung des Bildes, Flughöhe, Fluggeschwindigkeit, Neigungswinkel der Kameraachse gegenüber dem Boden oder ggf. Zahl der pro Zeile ausgelesenen Bildpunkte.

Neben einer Verwendung der Distanzmessungen zur Ergänzung oder Verbesserung der parallel aufgenommenen photographischen Information kann auch eine Vermessung von Punkten der Oberfläche ausschliesslich mit aktiven Distanzmessern erfolgen. Diese zeit- oder ortsabhängige Aufnahme von Distanzmessungen bietet z.B. Vorteile bei stark strukturierten Oberflächen oder bei Objekten mit stark wechselnden Lichtintensitäten, beispielsweise durch unterschiedliche Albedo. Ein solcher Anwendungsfall ergibt sich beispielsweise beim Überfliegen von tiefen Schluchten, die entsprechend schlecht ausgeleuchtet sind. Die Topographie dieser Struktur kann dann im nicht visuell registrierbaren Bereich zeitlich und/oder örtlich begrenzt ausschliesslich durch Distanzmessungen erfolgen. Diese Problematik tritt insbesondere auch bei der Vermessung von nicht-terrestrischen Objekten auf, da beim Fehlen einer Atmosphäre der Streulichtanteil sehr gering ist und die Oberfläche eines zu vermessenden Himmelskörpers extreme Hell-Dunkel-Schwankungen aufweisen kann, die nicht oder nur mit grossem Aufwand durch photographische bzw. optische berücksichtigt werden können. Auch kann ein erfindungsgemässes Verfahren bzw. ein erfindungsgemässer optischer Detektor dazu verwendet werden, während eines Kamerafluges bzw. dem raumgestützten Äquivalent sowohl Tag- als auch Nachtseite eines Himmelskörpers zu vermessen. Je nach Beleuchtungssituation schaltet ein erfindungsgemässer Detektor sukzessive oder diskret auf eine aktive Entfernungsmessung um, so dass beispielsweise ein Satellit mit zirkumpolarer Bahn einen unter sich hindurchdrehenden Planeten auf Tag- und Nachtseite mit unterschiedlichem Informationsgehalt vermessen kann.

In einer experimentellen Verwirklichung des Verfahrens wurde ein Gebiet von ca. 2300 m x 600 m aus der Luft aufgenommen. Innerhalb dieses Gebiets sind 48 Checkpoints verteilt, deren Position mit einer Genauigkeit von 2,5 cm horizontal und 3,5 cm vertikal bestimmt ist. Bei einem Kameraflug wurde aus einer Höhe von 600 m mit einer Kamera mit drei Zeilen aus jeweils 10200 Bildpunkten Luftbildaufnahmen durchgeführt.

Die verwendete Kamera wurde in zwei Varianten modifiziert. In der ersten Variante A werden vier konventionelle, ausschliesslich intensitätsregistrierende Bildpunkte der Nadir-Kamerazeile durch Bildpunkte mit zusätzlicher Entfernungsbestimmung ersetzt. Bei der zweiten Variante B werden je 4 Bildpunkte der vorwärts- und rückwärtsgeneigten Kamerazeilen bei unveränderter Nadirzeile ersetzt, so dass insgesamt 8 Bildpunkte mit einer zusätzlichen Aufnahme von Entfernungsinformation in der Kamera vorhanden sind.

Mit der unveränderten Kamera, wie auch mit beiden Varianten A und B, wurden jeweils Kameraflüge durchgeführt und die in den Bildern vorhandene topographische Information ausgewertet. Dabei zeigt sich, dass die Variante A mit veränderter Nadirzeile gegenüber dem unveränderten Kameramodell der mittlere Fehler von ca. 15 cm auf ca. 2,2 cm verringert und damit eine um fast den Faktor 7 verbesserte mittlere Genauigkeit der Höhe von Punkten (vertikale Genauigkeit) im Bild erreicht. Gegenüber dieser Variante A kann die Variante B eine nochmalige, allerdings geringere Erhöhung der Genauigkeit bewirken, da die mittlere Höhenabweichung nun auf unter 2 cm reduziert wird.

Auch in den horizontalen bzw. lateralen Richtungen konnte die mittlere Abweichung, insbesondere für die Variante B, um bis zu 35 % reduziert werden.

Das erfindungsgemässe Verfahren und eine dafür verwendbare Vorrichtung werden nachfolgend anhand von in der Zeichnung schematisch dargestellten Ausführungsbeispielen rein beispielhaft näher beschrieben. Im einzelnen zeigen
- Fig.1: die schematische Darstellung eines Verfahrens des Stands der Technik zur Luftbildphotogrammetrie mit einer Sensor-Kamera;
- Fig.2a-b: die schematische Darstellung des erfindungsgemässen Verfahrens;
- Fig.3: die schematische Darstellung der Anpassung von Aufnahmeparametern;
- Fig.4a-d: mögliche Kombinationen von Bildpunkten und Stützstellen;
- Fig.5a-c: die schematische Darstellung von Kamerazeilen zur Aufnahme von Luftbildern nach dem Stand der Technik und für einen erfindungsgemässen optischen Detektor und
- Fig.6: die schematische Darstellung eines erfindungsgemässen optischen Detektors durch Kombination einer Kamerazeile des Stands der Technik mit Laserentfernungsmessern.

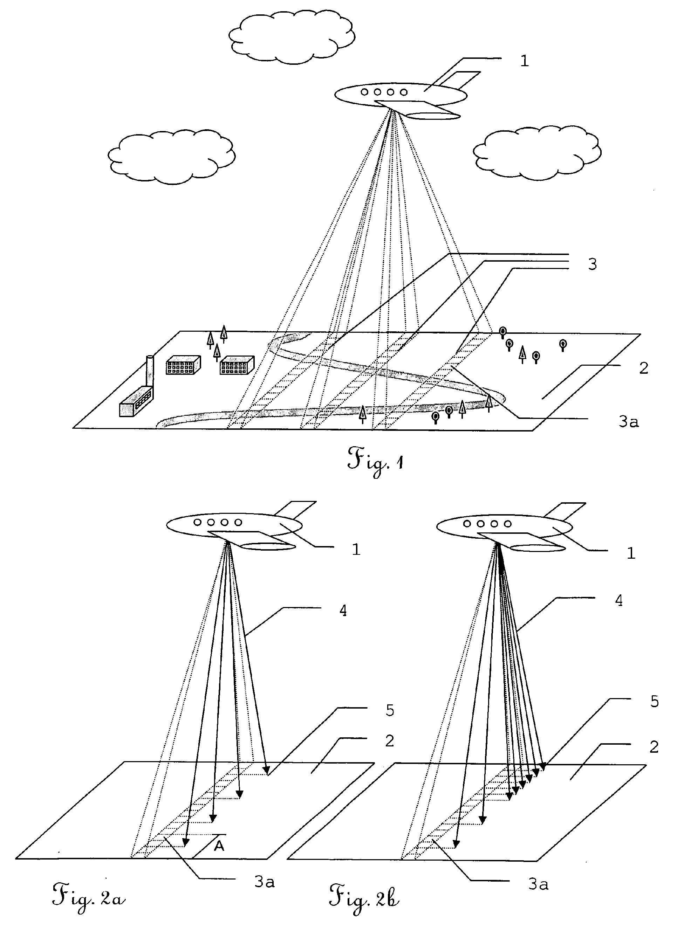

Fig.1 zeigt schematisch die Aufnahme einer Oberfläche 2 durch eine in einem Luftfahrzeug 1 montierte Kamera. Dabei wird die Oberfläche 2 mit drei Kamerazeilen 3, die aus einzelnen Bildpunkten 3a bestehen, abgetastet. Die drei Kamerazeilen 3 sind so angeordnet, dass Bilder aus drei Perspektiven, d.h. mit je einer Blickrichtung schräg nach vorne, senkrecht nach unten und schräg nach hinten, aufgenommen werden.

In Fig. 2a wird das erfindungsgemässe Verfahren schematisch dargestellt. Aus dem Luftfahrzeug 1 wird mit Laserstrahlen 4 eines oder mehrerer Laserentfernungsmesser die Distanz zu Stützstellen 5 gemessen, die Aufpunkte auf der Oberfläche 2 darstellen. Jede Stützstelle 5 ist hier exemplarisch einem Satz von 4 Bildpunkten 3a zugeordnet und enthält damit die Höheninformation für einen Zeitpunkt und für einen Streifen einer bestimmten Breite A. In der gewählten Darstellung befinden sich zur besseren Verdeutlichung die Stützstellen 5 ausserhalb der Projektion der Kamerazeile bzw. deren Bildpunkte 3a auf der Oberfläche 2. Die Lage der Stützstellen 5 im Moment der Aufnahme kann jedoch auch anders gewählt werden, solange eine Zuordenbarkeit von Stützstelle 5 und Bildpunkt 3a gewährleistet ist. Insbesondere können die Stützstellen direkt im Bereich der zu erfassenden Bildpunkte 3a positioniert werden.

In Abhängigkeit von der konkreten Topographie der Oberfläche 2 kann die Dichte der Stützstellen 5 variiert werden. Die Fig. 2b zeigt eine im oberen Bereich der Figur dichtere Plazierung von Stützstellen 5, die hier die Dichte der Bildpunkte 3a erreicht, d.h. zu jedem Bildpunkt wird eine Distanzmessung vorgenommen. Im unteren Teil der Figur ist diese Dichte vergleichsweise niedrig, da nur eine Distanzmessung für jeweils vier Bildpunkte 3a aufgenommen wird.

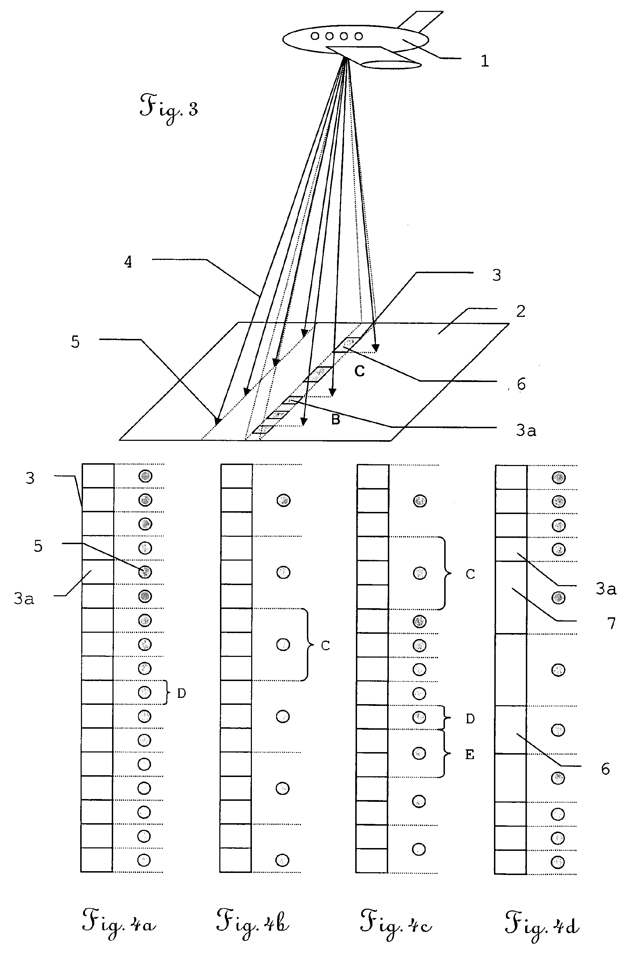

Fig.3 zeigt schematisch die Nutzung von Distanzinformationen zur Festlegung von Flug- bzw. Aufnahmeparametern. Durch gegenüber der betrachteten, aktiven Kamerazeile 3 in Flugrichtung vorwärts geneigte Distanzmessungen mit Laserstrahlen 4 zu vorwärts gelegenen Stützstellen 5 wird die in Kürze zu überfliegende Oberfläche sondiert. In Abhängigkeit von den somit gewonnenen Informationen hinsichtlich der Oberflächentopographie kann beispielsweise die Breite des pro Pixel aufgenommenen Ausschnittes der Oberfläche durch selektive Vergrösserung oder selektives Ausschalten einzelner Bildpunkte erreicht werden. Im unteren Bereich bleibt der aufgenommene Ausschnitt pro Bildpunkt 3a gegenüber vorherigen Aufnahmen unverändert, wobei eine Stützstelle für jeweils vier Bildpunkte aufgenommen wird. Im oberen Bereich wird der Ausschnitt durch einen im Vergleich zum unveränderten Bildpunkt 3a auf das Doppelte erweiterten Bildpunkt 6 vergrössert und eine Stützstelle für jeweils drei, nun allerdings grössere, Bildpunkte aufgenommen.

In Fig.4a-d werden exemplarisch und nicht abschliessend Zuordnungsmuster von Bildpunkten 3a und Stützstellen 5 dargestellt. Die Fig.4a zeigt eine einfache Zuordnung von jeweils einer Stützstelle 5 zu einem Bildpunkt 3a. Die einer Stützstelle zugeordnete Breite D beträgt die eines Bildpunktes. Damit entspräche diese Aufnahme von Distanzinformation einem parallelen topographischen LIDAR-Verfahren. In Fig.4b wird eine Stützstelle für jeweils drei Bildpunkte 3a vermessen. Fig.4c zeigt eine Variation der Zuordnungsverhältnisse für die Bildpunkte 3a zu den jeweiligen Stützstellen 5 bei unveränderter Grösse der Bildpunkte 3a. Je nach Oberflächenbeschaffenheit variiert dieses Verhältnis innerhalb einer Kamerazeile 3 von eins bis drei, so dass einer Stützstelle je nach Bereich sowohl eine Breite D von einem Bildpunkt 3a, eine Breite E von zwei Bildpunkten 3a oder eine Breite C von drei Bildpunkten 3a zugeordnet wird.

In Fig.4d erfolgt eine Variation der Bildpunktbreite bei unverändertem Zuordnungsverhältnis von Stützstelle 5 zu Bildpunkt von eins. Die erweiterten Bildpunkte 6 besitzen nun die Breite von zwei ursprünglichen Bildpunkten 3a und die erweiterten Bildpunkte 7 die Breite von drei ursprünglichen Bildpunkten.

Fig.5a zeigt eine Kamerazeile des Stands der Technik mit einer Abfolge F von intensitätsregistrierenden Elementen 8, wie sie beispielsweise bei CCD-Kameras realisiert ist. In einer solchen Abfolge wird erfindungsgemäss die Position eines oder mehrerer der intensitätsregistrierenden Elemente 8 zugleich oder alternativ zur Aufnahme von Entfernungsinformation ausgebildet.

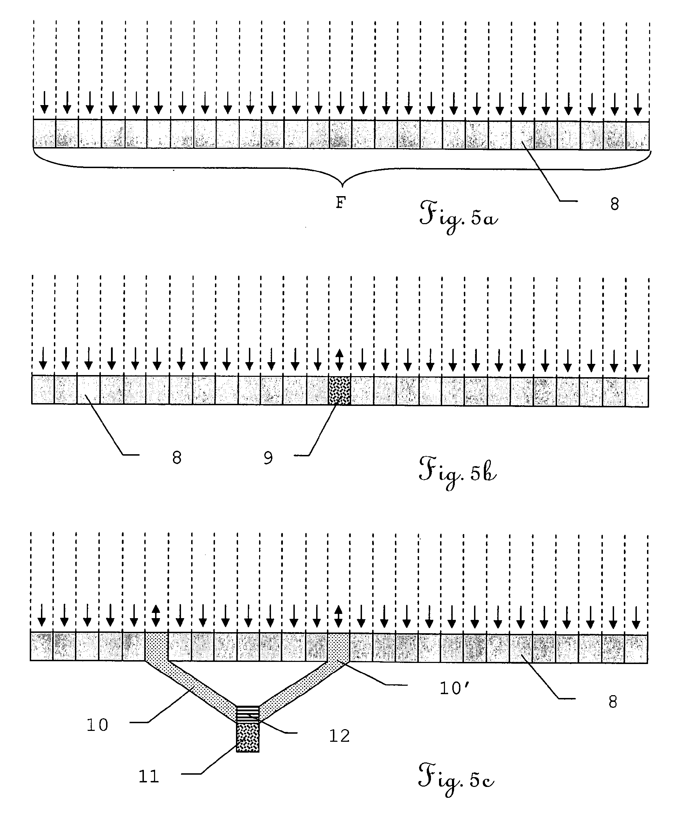

In Fig.5b wird eine Ausführungsform einer solchen Kamerazeile für einen erfindungsgemässen optischen Detektor schematisch dargestellt. In die Abfolge von intensitätsregistrierenden Elementen 8 als Kamerazeile wird ein entfernungsregistrierendes Element 9 integriert, das auch zeitgleich oder alternierend eine intensitätsregistrierende Eigenschaft aufweisen kann.

Eine weitere erfindungsgemässe Ausbildung einer Kamerazeile zeigt Fig.5c. In die Abfolge von intensitätsregistrierenden Elementen 8 wird ein entfernungsregistrierendes Element integriert, das nicht selbst zur Entfernungsmessung befähigt ist, sondern als Eintrittselement 10 mit strahlführenden Eigenschaften für einen Entfernungsmesser 11 ausgebildet ist. Dieser nicht innerhalb der Kamerazeile angeordnete Entfernungsmesser 11 erlaubt eine Flexibilität bei der Ausbildung eines erfindungsgemässen optischen Detektors, da räumlichen Gegebenheiten oder solche der Kontaktierung besser berücksichtigte werden können. Grundsätzlich kann jeweils ein Eintrittselement 10 einem Entfernungsmesser 11 zugeordnet werden. Allerdings besteht die auch Möglichkeit mehrere Eintrittselemente 10 und 10' einem gemeinsamen Entfernungsmesser 11 zuzuordnen, wobei der Strahlgang durch ein Auswahlelement 12 selektiv zum Entfernungsmesser 12 durchgeschaltet wird. Die Verwendung mehrerer Eintrittselemente 10, 10' für einen gemeinsamen Entfernungsmesser 11 erlaubt eine Erhöhung der Zahl von aufgenommenen Stützstellen oder aber die Reduzierung der dafür notwendigen und vergleichsweise technisch aufwendigen und teuren Entfernungsmesser 11. Werden in die Folge von intensitätsregistrierenden Elementen 8 Eintrittselemente 10, 10' integriert, so kann bei fehlender intensitätsregistrierender Eigenschaft der Eintrittselemente 10, 10" der an dieser Stelle fehlende Bildpunkt rechnerisch berücksichtigt werden, z.B. durch eine Berechnung aus den Intensitätswerten benachbarter Bildpunkte oder aus der Aufnahme des gleichen Bildpunktes mit einer der anderen Kamerazeilen, oder auch als Fehlstelle unberücksichtigt bleiben.

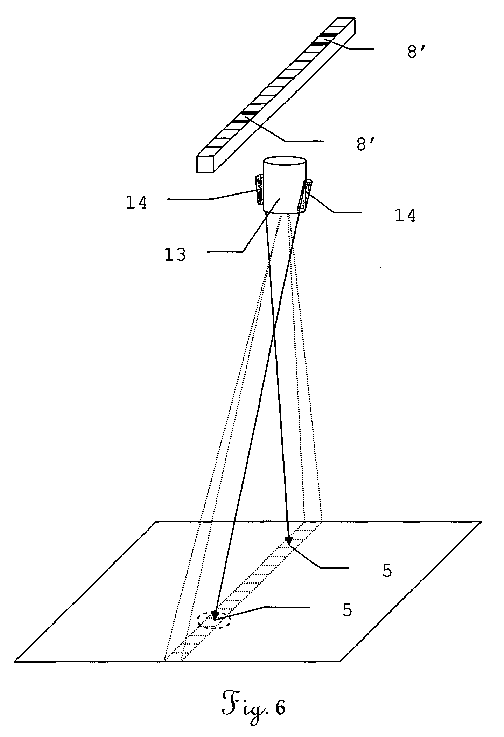

Eine Ausführungsform eines erfindungsgemässen optischen Detektors durch Kombination einer Kamerazeile des Stands der Technik mit Laserentfernungsmessern 14 wird in Fig.6 dargestellt. Die aufzunehmende Topographie wird über eine Optik 13 auf die Kamerazeile in an sich bekannter Weise abgebildet. Der Optik 13 sind Entfernungsmesser 14 zugeordnet, die angular so ausgerichtet sind, dass die von ihnen am Boden vermessene Stützstelle 5 ausgewählten Bildpunkten bzw. intensitätsregistrierenden Elementen 8' zugeordnet werden kann.

Neben der hier exemplarisch dargestellten fixierten Ausrichtung von Laserentfernungsmessern 14 kann auch alternativ oder ergänzend ein Laserentfernungsmesser mit verstellbarer Positionierung bzw. verstellbarem Strahlgang verwendet werden. Durch eine diskret einstellbare und angular hinreichend präzise Positionierung der Stützstelle kann mit einem Laserentfernungsmesser auch für verschiedene Bildpunkte diesen zugeordnete Stützstellen sequentiell aufgenommen werden. Um die zu bewegenden Massen und die technische Komplexität möglichst gering zu halten ist es insbesondere möglich, den Strahlgang des Laserstrahls in Art eines Scanners zu modifizieren und für verschiedene Bildpunkte zeitabhängig Stützstellen aufzunehmen.

Es versteht sich, dass die dargestellten Figuren eine von vielen Ausführungsformen darstellen und der Fachmann alternative Realisierungsformen, z.B. unter Verwendung anderer Zahlen oder Anordnungen von Kamerazeilen oder Zuordnungsverfahren von Stützstellen zu Bildpunkten ableiten kann. Insbesondere die Darstellung einer nur linearen Anordnung von Bildpunkten in den Kamerazeilen ist nur als vereinfachende und exemplarische Darstellung zu verstehen, der keinerlei ausschliessender oder einschränkender Charakter zukommt. Gleichermassen kann die erfindungsgemässe Vorrichtung auf mehrdimensionale Anordnungen von Bildpunkten angewendet werden.

## Patentansprüche

1. Verfahren zur luft- oder raumgestützten Photogrammetrie mit mindestens
• einem gegenüber einer aufzunehmenden Oberfläche (2) bewegten optischen Detektor zur Aufnahme mindestens eines Luftbildes, wobei der optischen Detektor wenigstens mehreren detektierenden Komponenten aufweist, und
• einer, vorzugsweise luft- oder raumgestützten, Daten-Speichereinheit,
wobei während einer Aufnahmebewegung durch die detektierenden Komponenten nacheinander Bildpunkte (3a) des Luftbildes aufgenommen und in der Daten-Speichereinheit gespeichert werden,
**dadurch gekennzeichnet, dass**
mit Mitteln zur Distanzmessung während der Aufnahmebewegung Distanzen von vorgegebenen Bezugspunkten zu Stützstellen (5) auf der Oberfläche (2) gemessen und in der Daten-Speichereinheit gespeichert werden,
wobei die Zahl der Stützstellen (5) vorzugsweise kleiner als die Zahl der Bildpunkte (3a) ist und
wobei wenigstens einer Distanz mindestens ein Bildpunkt (3a) zugeordnet ist.

2. Verfahren nach Anspruch 1,
**dadurch gekennzeichnet, dass**
bei dem nach der Aufnahmebewegung in einem weiteren Verfahrensschritt
aus den aufgenommenen Bildpunkten (3a) eine Oberflächentopographie berechnet wird,
wobei durch die gemessenen Distanzen Zwangsbedingungen für die Oberflächentopographie vorgegeben werden.

3. Verfahren nach einem der vorangehenden Ansprüche,
**dadurch gekennzeichnet, dass**
während der Aufnahmebewegung mit einer Recheneinheit aus den gemessenen Distanzen und/oder den Bildpunkten eine Optimierung der Bewegungsparameter hinsichtlich der Aufnahme des Luftbildes erfolgt.

4. Verfahren nach einem der vorangehenden Ansprüche,
**dadurch gekennzeichnet, dass**
die Distanzen örtlich und/oder zeitlich differenziert gemessen werden, insbesondere in Abhängigkeit von Parametern der Aufnahme des Luftbildes.

5. Verfahren nach einem der vorangehenden Ansprüche,
**dadurch gekennzeichnet, dass**
Zahl und/oder Dichte der Stützstellen (5) in Abhängigkeit von den gemessenen Distanzen, vorzugsweise in Abhängigkeit von der Veränderung von Distanzwerten, variiert wird.

6. Verfahren zur photogrammetrischen Berechnung einer Oberflächentopographie aus wenigstens einem Luftbild, das mit einem Verfahren nach einem der Ansprüche 1 bis 5 aufgenommen wurden,
**dadurch gekennzeichnet, dass**
durch in Korrelation mit Bildpunkten (3a) gemessene Distanzen Zwangsbedingungen (5) für die Oberflächentopographie vorgegeben werden.

7. Vorrichtung zur Durchführung eines Verfahrens nach einem der Ansprüche 1 bis 5,
mit mindestens einem luft- oder raumgestützten optischen Detektor, mit wenigstens mehreren detektierenden Komponenten, vorzugsweise einer mehrzeiligen CCD-Kamera, zur Aufnahme mindestens eines Luftbildes aus Bildpunkten (3a),
wobei dem optischen Detektor wenigstens eine, vorzugsweise luft- oder raumgestützten, Daten-Speichereinheit zur Speicherung der Bildpunkte (3a) des mindestens einen Luftbildes zugeordnet ist,
**gekennzeichnet durch**
Mittel zur Distanzmessung zu Stützstellen (5) auf der Oberfläche (2).

8. Vorrichtung nach Anspruch 7,
**dadurch gekennzeichnet, dass**
die Mittel zu Distanzmessung wenigstens einen Laserentfernungsmesser (14) aufweisen, der so ausgebildet und angeordnet ist, dass die von dem Entfernungsmesser vermessene Stützstelle (5) wenigstens einem Bildpunkt (3a) zuordenbar ist.

9. Vorrichtung nach Anspruch 8,
**dadurch gekennzeichnet, dass**
der Entfernungsmesser (14) so angeordnet ist, insbesondere mit wenigstens zwei einstellbaren Ausrichtungen, dass die von dem Entfernungsmesser (14) vermessene Stützstelle (5) innerhalb des von dem Bildpunkt (3a) erfassten Oberflächenbereichs positioniert ist.

10. Vorrichtung nach einem der Ansprüche 7 bis 9,
**dadurch gekennzeichnet, dass**
eine Recheneinheit zur Optimierung der Parameter der Aufnahmebewegung vorhanden ist,
wobei die Optimierung hinsichtlich der Aufnahme des Luftbildes und unter Verwendung der gemessenen Distanzen und/oder der Bildpunkte (3a) erfolgt.

11. Optischer Detektor, insbesondere für eine Vorrichtung nach Anspruch 7 bis 10, mit wenigstens einer Kamerazeile als Abfolge aus intensitätsregistrierenden Elementen (8), vorzugsweise in Form einer mehrzeiligen CCD-Kamera, zur Aufnahme mindestens eines Luftbildes aus Bildpunkten (3a),
**dadurch gekennzeichnet, dass**
in mindestens einer der wenigstens einen Kamerazeile (3) in der Abfolge aus intensitätsregistrierenden Elementen (8) mindestens ein entfernungsregistrierendes Element (9) angeordnet ist.

12. Optischer Detektor nach Anspruch 11,
**dadurch gekennzeichnet, dass**
in mindestens einer der wenigstens einen Kamerazeile in der Abfolge aus intensitätsregistrierenden Elementen (8) mindestens ein entfernungsregistrierendes Element (9) angeordnet ist, welches auch intensitätsregistrierende Eigenschaften aufweist.

13. Optischer Detektor nach Anspruch 11 oder 12,
**dadurch gekennzeichnet, dass**
das entfernungsregistrierende Element (9) als Entfernungsmesser ausgebildet ist.

14. Optischer Detektor nach Anspruch 11 oder 12,
**dadurch gekennzeichnet, dass**
das entfernungsregistrierende Element als Eintrittselement (10,10') für einen zu einem Entfernungsmesser (11) führenden Strahlgang ausgebildet ist.

15. Optischer Detektor nach Anspruch 14
**gekennzeichnet durch**
mehrere Eintrittselemente (10,10'), wobei diese Eintrittselemente einem gemeinsamen Entfernungsmesser (11) zugeordnet sind.
